# EUROPEAN PATENT APPLICATION

(11) **EP 3 327 837 A1**
(43) Date of publication of application: **30.05.2018**
(21) Application number: 16200316.4
(22) Date of filing: 23.11.2016
(51) Int. Cl.: H01M 4/66, H01M 10/0562, H01M 6/40, H01M 10/0585

(54) **LI-ION BASED ELECTROCHEMICAL ENERGY STORAGE CELL**

(71) Applicant: Eidgenössische Materialprüfungs- und Forschungsanstalt EMPA, 8600 Dübendorf (CH)
(72) Inventor: Buecheler, Stephan, 79875 Dachsberg (DE); Filippin, Alejandro Nicolas, 8304 Wallisellen (CH); Rawlence, Michael, 8604 Volketswil (CH)
(74) Representative: Schneider Feldmann AG Patent- und Markenanwälte

(57) **Abstract**

The disclosed invention consists of a multi-layered thin film Li-ion based electrochemical energy storage cell, prepared in-situ in subsequent deposition processes, in which the subsequent deposited layers resist elevated temperatures of 700°C or higher. This is reached by a multi-layered thin film Li-ion based electrochemical energy storage cell, comprising a substrate layer, in form of a metal or non-metal compound temperature-resistant to at least 700°C and higher, a cathode current collector layer, comprising an electrically conductive composition of NixAl, wherein x lies between 0.3 and 9, deposited directly onto the substrate layer, a cathode layer comprising a lithium compound, which crystallises at elevated temperatures at or above 700°C, a solid electrolyte layer comprising lithium, which crystallises at elevated temperatures at or above 700°C, an anode layer and an anode current collector layer.

## Description

### TECHNICAL FIELD

The present invention describes a multi-layered thin film Li-ion based electrochemical energy storage cell, prepared in-situ in subsequent deposition processes, rechargeable thin-film Li-ion based solid state battery in form of a stack of a multiplicity of multi-layered thin film Li-ion based electrochemical energy storage cells and a method for production of a multi-layered thin film Li-ion based electrochemical energy storage cell, by in-situ deposition steps followed by annealing process steps at elevated temperatures.

### STATE OF THE ART

In the field of electrochemical energy storage, research is concentrated on lithium-based batteries, since these currently have the largest available energy density with lowest weight, especially compared to nickel or lead-based accumulators. Lithium-ion accumulators, secondary or rechargeable batteries or battery cells can be used for electrically powered vehicles, as well as in computer technology, in particular for notebooks, smartphones or tablets.

Lithium-ion battery cells have a positive cathode and a negative anode, sandwiching an electrolyte in between. A cathode current collector and an anode current collector are placed in direct electrical contact with the cathode and the anode respectively. Charged lithium ions can move between both electrodes, while the discharge process from anode to cathode takes place.

To improve Li-ion batteries different approaches were chosen in the past, improving materials of electrodes and electrolytes. Especially foil like shapes of the components of Li-ion based cells were designed, leading to higher energy densities exhibiting an increased power-to-weight ratio, being ideal for commercial use in electric vehicles. The results were still bulky and these thin film Li-ion based batteries, still did not meet all requirements of the industry.

Different secondary batteries or rechargeable batteries with different layers in shape and materials were tried in the past. One possibility is disclosed in WO2014062676. Thin film batteries comprising different substrates and metal or metal oxide cathode current collectors are disclosed with thicknesses of less than 3 micrometers.

Recent efforts in the development of Li-ion based secondary batteries tried to find improved materials and sufficient shapes of the current collectors. In EP2897203 a composite current collector for an energy storage device electrode is disclosed, comprising at least copper, aluminum, nickel, gold, silver, and alloys thereof with a thickness from 1 to 100 µm.

EP2738852 discloses a current collector for a bipolar lithium ion secondary battery, wherein the metal layer contains at least one metal material selected from the group consisting of aluminum, nickel, copper, iron, titanium, and an alloy, a metal carbide, a metal nitride and a metal oxide of these metals.

Regarding all-solid-state batteries there are still none ready for the market but the expectations around this technology are rather high. Bulk batteries would be preferred to thin film ones for applications demanding high to very high capacities, whereas for microelectronics and wearables thin films would be preferred.

Cathode current collectors in conventional Li-ion battery technology and especially in solid state batteries are predominantly based on aluminum due to its low cost and electrochemical stability at high voltage, exhibiting minor electrochemical reactions in the 3.5-5 V vs Li+/Li range due to the formation of a passivation layer.

However, aluminum melts already at 660 °C, which is incompatible with state-of-the-art battery materials, such as the high-voltage cathode LiMn1.5Ni0.504 and LiCoO2 that require up to 750 °C to crystallize fully or solid-state electrolytes like LLZO (Li₇La₃Zr₂O₁₂) demanding equal temperatures for crystallization. The manufacturing of the electrochemical energy storage cells is still problematic, due to the temperatures used while depositing different material layers.

### DESCRIPTION OF THE INVENTION

The object of the present invention is to create a multi-layered Li-based solid state electrochemical energy storage cell, which can easily be produced in an in-situ production process, which can resist elevated temperatures of more than 700°C. With the high preparation temperatures, the prepared layers of the multi-layered solid state electrochemical energy storage cell are stable against oxidation and reactions with lithium.

The elevated annealing temperatures are, for certain layers, necessary to reach crystallization. It was found that conventional cathode current collector weren't suitable due to the subsequent in-situ production, starting with a substrate and the cathode current collector. For example cathode current collectors of stainless steel, tungsten, nickel and chromium react/oxidize in the potential range 4-4.5 V vs Li+/Li or oxidize below 600 °C.

However, we have experimentally determined that NixAl is electrochemically stable in the potential range 2-4.7 V vs Li+/Li, but shows, only in the first cycle, a minor reaction from 3.5-5 V vs Li/Li+ which we attributed to the formation of a passivation layer with the electrolyte.

Another object of the subject matter of the invention is to provide a manufacturing method for such multilayered Li-based solid state electrochemical energy storage cell and rechargeable Li-ion based batteries made of these multilayered Li-based solid state electrochemical energy storage cells.

### BRIEF DESCRIPTION OF THE DRAWINGS

The accompanying drawings, which are incorporated in and constitute a part of this application, illustrate several aspects of the invention and, together with a description of the embodiments, serve to explain the principles of the invention.
- Figure 1: shows a schematic sectional view of one embodiment of a multi-layer solid state Li-based electrochemical energy storage cell, while
- Figure 2: shows a schematic sectional view of second embodiment of an electrochemical energy storage cell with an additional cathode interlayer and anode interlayer.
- Figures 3: are showing schematic sectional views of the layer by layer production of a multi-layer solid state Li-based electrochemical energy storage cell according steps a) to e).
- Figure 4: shows a schematic sectional view of a rechargeable Li-ion based battery, made of the aforementioned cells with and without an anode current collector.

The embodiments of the present invention described below are not intended to be exhaustive or to limit the invention to the precise forms disclosed in the following detailed description.

### DESCRIPTION

We are describing a thin-film solid state energy storage device in form of an electrochemical solid state energy storage cell 0, in a multi-layered setup with a described ascending order of subsequent deposited layers. The total thickness of this electrochemical solid state energy storage cell 0 is about a few tens of microns.

The electrochemical solid state energy storage cell 0 comprises at least the following layers in subsequent order: a substrate layer 1, a cathode current collector layer 2, a cathode layer 3, a solid electrolyte layer 4, an anode layer 5 and an anode current collector layer 6. Aside from the substrate layer 1, the thicknesses of each layer 2, 3, 4, 5, 6 should be between 100 nm and 50 microns. Current leads 7 and 7' are connected to the cathode current collector, layer 2, and the anode current collector, layer 6.

Solid state refers to the use of a solid electrolyte in layer 4, a promising new development which makes very thin, robust energy storage cells 0 possible. There are some solid electrolyte materials applicable as solid electrolyte layer 4 known. We could reach good results with Li₇La₃Zr₂O₁₂ (LLZO), with thicknesses between 100 nm and 2 microns, in particular 500 nm.

For the substrate layer 1, different metals and non-metals such as glass can be used. In our experiments we used stainless steel, which is temperature resistant well above 700°C, in particular in form of a stainless steel foil.

The cathode current collector layer 2 has to be electrochemical stable, high temperature corrosion resistant at temperatures higher than 700 °C and resistant to reactions with lithium. We found, that a NixAl composition showed good results, leading to a simplified production method and showing desired oxidation resistance and lithium resistance. The x lies between 0.3 and 9, in particular between 1 and 3. While the aluminium amount increases the oxidation resistance, the nickel amount increases the resistance against lithium.

According to our experimental determinations we have found that below 50 nm of the cathode current collector layer 2 the conductivity decreases quite sharply in agreement with the formation of islands, whereas above 1 micron the conductivity can be considered as the bulk value. The thickness of the cathode current collector layer 2 should lie between 50 nm and 5 microns, in particular 1 micron.

To tune the effect of the cathode current collector layer 2, a third component is added to the NixAl, in particular in form of an amount of chromium. The composition of the cathode current collector layer 2 should comprise up to 30% weight of chromium.

After deposition of the cathode current collector layer 2, the missing layers 3, 4, 5, 6 will be deposited, which is at least partly associated with an annealing step after some deposition steps. These annealing steps at elevated temperatures up to 700°C and more, are harmful for cathode current collectors known from the prior art. But the above described cathode current collector layer 2 is resistant against the elevated temperatures.

The NixAl thin film cathode current collector layers 2 are high temperature oxidation resistant above 1000 °C, electrochemically stable up to at least 4.5 V vs Li+/Li and lithium resistance at high temperatures at least up to 700 °C.

We have found that NixAl does not present any reaction with lithium when annealed for example with LiMn1.5Ni0.5O4 or Li2O at a temperature of 750 °C. Furthermore, above a 10% atomic percentage of Al in the superalloy, NixAl can effectively withstand annealing in oxygen at more than 1000 °C for long periods of time. Noble metals such as gold and platinum tend to alloy with lithium and have a prohibitive cost to be used in mass produced batteries.

The cathode layer 3, directly neighbouring the cathode current collector layer 2, is deposited subsequently onto the cathode current collector layer 2. Lithium comprising material as LiMn1.5Ni0.5O4, LiCoO₂, LiNi_{1/3}Co_{1/3}Mn_{1/3}O₂, LiNiCoAlO₂ are among the suitable candidates. The thickness of cathode layer 3 is between 100 nm and 50 microns. For crystallization of the cathode layer 3 an annealing step has to follow the deposition step of the cathode layer 3 unless deposition at elevated temperature is carried out.

Directly connected to the cathode layer 3 is the solid electrolyte layer 4 as stated above. To allow crystallization of the solid electrolyte layer 4, also here an annealing step following the deposition step is necessary unless deposition at elevated temperature is carried out. Due to the fact, that all previous deposited materials are temperature resistant, the production method ensures faultless layer production.

The anode layer 5 may be made of silicon, lithium, LiTi₄O₅ or aluminium, tin and/or alloys thereof and is also deposited onto the solid electrolyte layer 4. The chosen thickness is in the order of the thickness of the cathode layer 3.

Also the anode current collector layer 6 is subsequently deposited onto the anode layer 5 and may be made from an electrically conductive material such as copper, titanium, nickel, gold, silver, platinum, molybdenum, manganese, metal alloys, conductive ceramics, conductive semiconductors and the like.

The thickness of the anode current collector layer 6 varies between 100 nm and 1 millimetre. The anode current collector layer 6 would not need to resist elevated temperatures.

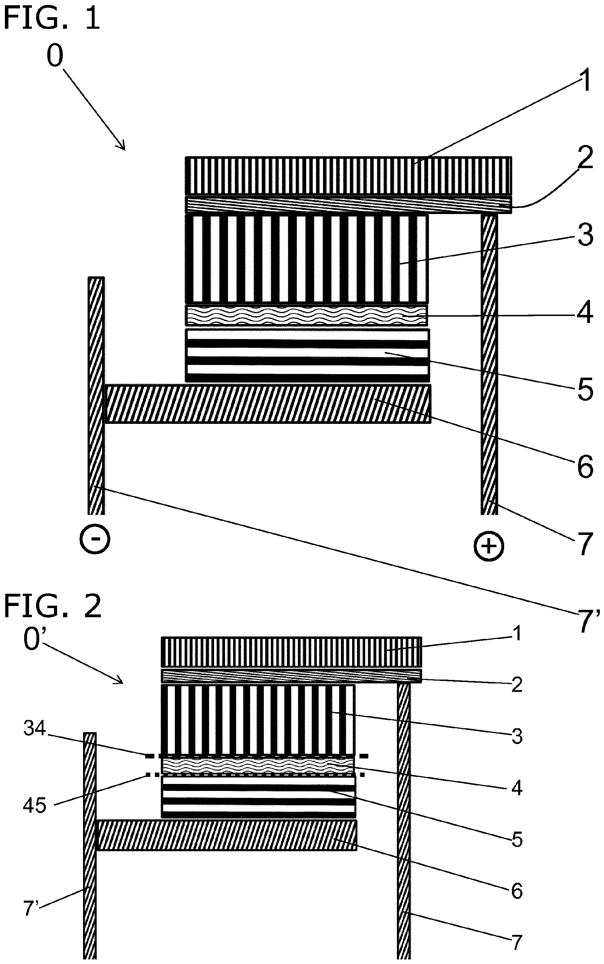

Figure 2 shows an electrochemical energy storage cell 0' in the multi-layered setup as known from figure 1, wherein the same parts are marked with the same references. The differences are the arrangements of a cathode interlayer 34, between adjacent cathode layer 3 and solid electrolyte layer 4 and an anode interlayer 45 between solid electrolyte layer 4 and anode layer 5. The suitable thickness of each layer 34, 45 should be between 10 nm to 50 nm. In particular the interlayers 34, 45 are comprising a Li-comprising compound, wherein the cathode interlayer 34 could comprise LiF, LiAlF₆, Li₂ZrF₆, LiNbO₃, while the anode interlayer 45 could comprise LiF, LiAlF₆, Li₂ZrF₆, Li₃N, Li₂S.

Due to the novel cathode current collector layer 2 a direct deposition and annealing treatment of the subsequent layers 3, 4 and interlayers 34, 45 in a cell/battery onto the cathode current collector layer 2 is possible. In addition, the deposition technique of the NixAl thin film has already proven to be industrially scalable and a cost-effective solution for large scale production.

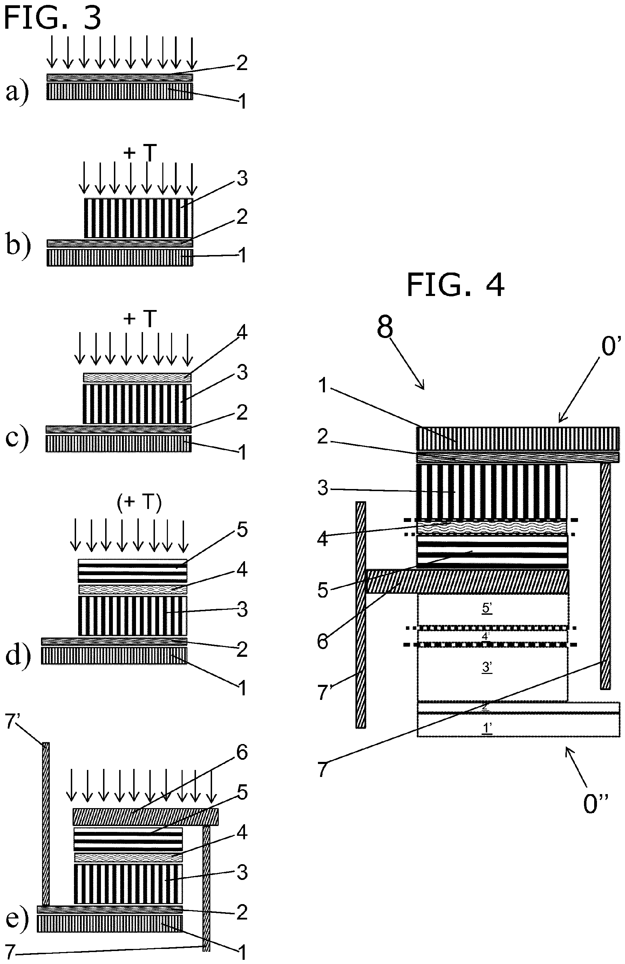

Figure 3a) to e) are showing the productions steps, beginning with providing a substrate layer 1. The production method starts with the deposition of the cathode current collector layer 2, by any adequate technique, on any processable substrate layer 1, preferably of flexible nature, which is not restricted to conductive substrates but it would be desirable.

Possible deposition techniques for the cathode current collector layer 2 are electron beam evaporation, thermal evaporation, atomic layer deposition, pulsed laser deposition, sputtering, thin-film printing. In particular electron beam evaporation or magnetron sputtering will be applied.

This is followed by a deposition of the cathode material forming the cathode layer 3 onto the cathode current collector layer 2 followed by an annealing step at elevated temperatures or a photo curing step marked with "+T" in figure 3b). The annealing step provides crystallization of the cathode layer 3. The annealing step can be done by heating the setup up to 750 °C in oxygen atmosphere. The annealing can also be done by photonic curing.

Subsequently deposition of the solid-state electrolyte material forming the solid electrolyte layer 4 on the cathode layer 3, followed by another annealing step up to 750 °C in oxygen atmosphere. Deposition and annealing might be simultaneous.

After the crystallization of the solid electrolyte layer 4 is done, anode material will be deposited forming the anode layer 5 onto the solid electrolyte layer 4. Optionally another annealing step can be carried out.

Before finally the deposition of the anode current collector layer 6, for example copper or nickel, is performed, without an annealing step.

For commercially reasons a roll-to-roll manufacturing will help to increase the product output and bring costs down.

After layerwise production by deposition and annealing steps, the current leads 7, 7' can be connected to the cathode current collector layer 2 and the anode current collector layer 6, for example with known welding processes.

A rechargeable Li-ion based solid state battery 8 is producible by a stack of a multiplicity of in-situ prepared electrochemical energy storage cell 0, 0'. As marked in figure 4 a first electrochemical energy storage cell 0', comprising a substrate layer 1, a cathode current collector layer 2, a cathode layer 3, cathode interlayer 34, solid electrolyte layer 4, anode interlayer 45, anode layer 5 and anode current collector layer 6 are deposited and annealed as stated above. A second electrochemical energy storage cell 0" is prepared in the same way, but without an anode current collector layer 6. The second electrochemical energy storage cell 0" will be rotated and connected to the anode current collector layer 6 of the first electrochemical energy storage cell 0', such that the anode layer 5' of the second electrochemical energy storage cell 0" connects to the anode current collector layer 6 of the first electrochemical energy storage cell 0'. Current leads 7, 7' can be connected to cathode current collector layers 2, 2' and the anode current collector layer 6.

A multiplicity of such thin-film solid state energy storage cells 0, 0', 0" is forming an electrochemical battery or rechargeable battery 8. The electrochemical energy storage cells 0 or rechargeable batteries 8 can be used in a variety of application as stated above from hearing aids to electrically powered vehicles.

We show a novel cathode current collector layer 2 for next-generation bulk and thin film Li-ion batteries 8 based on a thin film of a Ni-Al superalloy with a composition in the range NixAl, x=0.3-9, deposited by magnetron sputtering at 300 °C in a low pressure argon atmosphere.

This cathode current collector shows a sufficient high temperature oxidation and lithium resistance and is electrochemically stable, for bulk and thin film Li-ion batteries.

Onto the shown cathode current collector layer 2, state-of-the-art solid state electrolytes, that require high temperatures such as the garnet Li7La3Zr2O12 which requires at least 700 °C in oxygen atmosphere, can be directly deposited, annealed and electrically characterized to reach their proper crystallization.

By tuning the composition of NixAl thin film cathode current collector 2 to a richer nickel superalloy (x>2.9), the reaction between aluminium and the more mobile lithium of the solid electrolyte layer 4 at high temperatures can be avoided/minimized.

Fabrication by magnetron sputtering and characterization of NixAl thin films with different compositions were carried out. Annealing experiments in the presence of other materials (LiMn1.5Ni0.5O4, Li7La3Zr2O12, Li2O) and under oxygen atmosphere were carried out along with electrochemical ones.

### LIST OF REFERENCE NUMERALS

0 electrochemical energy storage cell (Multi-layered, thin film, Li-ion based)
1 substrate layer
2 cathode current collector layer
3 cathode layer
   34 cathode interlayer
4 solid electrolyte layer
   45 anode interlayer
5 anode layer
6 anode current collector layer
7, 7' current leads
8 rechargeable Li-ion based solid state battery

## Claims

1. Multi-layered thin film Li-ion based electrochemical energy storage cell (0), prepared in-situ in subsequent deposition processes,
comprising in ascending order:
a substrate layer (1), in form of a metal or non-metal compound temperature-resistant to 700°C and higher,
a cathode current collector layer, comprising an electrically conductive composition of NixAl, wherein x lies between 0.3 and 9, deposited directly onto the substrate layer (1),
a cathode layer (3) comprising a lithium compound, which crystallises at or above elevated temperatures of 700°C,
a solid electrolyte layer (4) comprising lithium, which crystallises at or above elevated temperatures of 700°C,
an anode layer (5) and
an anode current collector layer (6).

2. Multi-layered thin film Li-ion based electrochemical energy storage cell according to claim 1, wherein x is between 1 and 3.

3. Multi-layered thin film Li-ion based electrochemical energy storage cell according to claim 1 or 2, wherein layer thickness of the cathode current collector layer (2) is between 50 nm and 5 microns.

4. Multi-layered thin film Li-ion based electrochemical energy storage cell according to one of the preceding claims, wherein the cathode current collector layer (2) comprises in addition to NixAl up to 30% weight of chromium.

5. Multi-layered thin film Li-ion based electrochemical energy storage cell according to one of the preceding claims, wherein between cathode layer (3) and solid electrolyte layer (4) a cathode interlayer (34) with a thickness between 10 nm and 50 nm and/or between solid electrolyte layer (4) and anode layer (5) an anode interlayer (45) with a thickness between 10 nm and 50 nm is placed.

6. Multi-layered thin film Li-ion based electrochemical energy storage cell according to claim 5, wherein the cathode interlayer (34) comprises LiF, LiAlF₆, Li₂ZrF₆ or LiNbO₃ and/or the anode interlayer (45) comprises LiF, LiAlF₆, Li₂ZrF₆, Li₃N or Li₂S.

7. Multi-layered thin film Li-ion based electrochemical energy storage cell according to one of the preceding claims, wherein the thickness of the substrate layer (1) lies between 5 microns and 1 millimetre, the thickness of the solid electrolyte layer (4) lies between 100 nm and 2 microns and the thickness of the anode current collector layer (6) lies between 100nm and 1 millimetre.

8. Multi-layered thin film Li-ion based electrochemical energy storage cell according to one of the preceding claims,
wherein
the cathode layer (3) comprises LiMn_{1.5}Ni_{0.5}O₄, LiCoO₂, LiNi_{1/3}Co_{1/3}Mn_{1/3}O₂ or LiNiCoAlO₂,
the solid electrolyte layer (4) comprises Li₇La₃Zr₂O₁₂ (LLZO), (Li, La)(Ti, M)O₃ (M=rare metal oxide), LiMn_{1.5}Ni_{0.5}O₄, or Li₂O and the anode layer (5) comprises silicon, lithium, LiTi₄O₅, aluminium, tin and/or alloys thereof.

9. Rechargeable thin-film Li-ion based solid state battery (8) in form of a stack of a multiplicity of multi-layered thin film Li-ion based electrochemical energy storage cells (0', 0") according to one of the preceding claims, wherein at the anode current collector layer (6) of a first multi-layered thin film Li-ion based electrochemical energy storage cell (0') a second in-situ produced multi-layered thin film Li-ion based electrochemical energy storage cell (0") without an anode current collector layer (6) is rotated and connected with its anode layer (5') at the anode current collector layer (6) of the first multi-layered thin film Li-ion based electrochemical energy storage cell (0').

10. Rechargeable thin-film Li-ion based solid state battery (8) according to claim 9, wherein cathode interlayer (34) and/or anode interlayer (45) building part of first and second cells (0', 0").

11. Method for production of a multi-layered thin film Li-ion based electrochemical energy storage cell (0, 0', 0"), by in-situ deposition steps followed by annealing process steps at elevated temperatures,
**comprising the steps of:**
- providing a substrate layer (1),
- deposition of a cathode current collector layer (2), comprising an electrically conductive composition of NixAl, wherein x lies between 0.3 and 9, deposited directly onto the substrate layer (1), followed by
- deposition of a cathode layer (3) onto the cathode current collector layer (2) and a subsequent
- annealing step of the cathode layer (3) at elevated temperatures at or above 700°C for crystallization of the cathode layer (3) material, before
- deposition of a solid electrolyte layer (4) and
- an annealing step at elevated temperatures at or above 700°C for crystallization of the solid electrolyte layer (4) is carried out, followed by
- deposition of an anode layer (5),
and
- deposition of an anode current collector layer (6), before
- current leads (7, 7') are connected at the cathode layer (3) and anode layer (5).

12. Method for production of a multi-layered thin film Li-ion based electrochemical energy storage cell (0, 0', 0") according to claim 11, wherein the in-situ deposition steps are carried out by thermal evaporation, atomic layer deposition, pulsed layer deposition, sputtering or thin-film printing.

13. Method for production of a multi-layered thin film Li-ion based electrochemical energy storage cell (0, 0', 0") according to claim 11, wherein the in-situ deposition steps are carried out by electron beam evaporation or magnetron sputtering, followed by subsequent or simultaneous annealing under oxygen atmosphere.

14. Method for production of a multi-layered thin film Li-ion based electrochemical energy storage cell (0, 0', 0") according to one of the claims 11 to 13, wherein a cathode interlayer (34) is deposited between cathode layer (3) and solid electrolyte layer (4) and/or an anode interlayer (45) is deposited between solid electrolyte layer (4) and anode layer (5).
